# EUROPEAN PATENT APPLICATION

(11) **EP 4 177 102 A1**
(43) Date of publication of application: **10.05.2023**
(21) Application number: 21837177.1
(22) Date of filing: 06.07.2021
(51) Int. Cl.: B60L 53/80

(54) **TRAY PUSHING BOX, AND BATTERY SWAPPING DEVICE AND METHOD FOR CONTROLLING SAME**

(30) Priority: 06.07.2020 CN 202010643280; 06.07.2020 CN 202010643286; 06.07.2020 CN 202010643296; 06.07.2020 CN 202010642718
(71) Applicant: Aulton New Energy Automotive Technology Group, Guangzhou, Guangdong 510700 (CN); Shanghai Dianba New Energy Technology Co., Ltd., Shanghai 201308 (CN)
(72) Inventor: ZHANG, Jianping, Shanghai 201308 (CN); JI, Yi, Shanghai 201308 (CN); WEN, Chao, Shanghai 201308 (CN); QIU, Danliang, Shanghai 201308 (CN)
(74) Representative: Bittner, Bernhard
(86) International application number: PCT/CN2021/104839
(87) International publication number: WO 2022/007813

(57) **Abstract**

A tray pushing box, which is arranged on a battery tray of a battery swapping device and is used for pushing or pulling a battery pack between the battery tray and a battery compartment or a battery bracket in an electric vehicle. The tray pushing box comprises: a tray pushing box body, which can move on a battery tray; a detection module, which is used for detecting a contact state of the tray pushing box body with respect to a battery pack; and a control module, which is electrically connected to the detection module, the control module being used for controlling a movement state of the tray pushing box body, and the control module controlling the tray pushing box body to implement a corresponding movement state when the detection module detects that the contact between the tray pushing box body and the battery pack is completed. A contact state of a tray pushing box body with respect to a battery pack is detected, and corresponding movement state control is then implemented, such that a reliable connection between a tray pushing box and the battery pack can be ensured, and situations such as collision with the battery pack are avoided, thereby improving the battery swapping reliability and safety of a battery swapping device.

## Description

This application claims priority of Chinese patent applications CN2020106432803, CN2020106432860, CN2020106432964 and CN2020106427186, filed on July 6, 2020. The contents of the above Chinese patent applications are incorporated herein by reference in their entirety.

### Field of invention

The present invention relates to a field of battery swapping, and in particular to a tray pushing box, and battery swapping device and method for controlling same.

### Prior arts

In the prior art, as a place to provide battery swapping service for new energy electric vehicles, a battery swapping station is usually equipped with a battery swapping device for installation and removal of battery packs and transportation of batteries between the battery swapping station and electric vehicles. The battery swapping device comprises a battery tray, which is used to place the battery pack and perform a specific process of installation and removal of the battery pack. During the process of installation and removal of the battery pack, the battery pack needs to be pushed or pulled between the battery tray and a battery compartment or a battery bracket in an electric vehicle. However, in the prior art, the tray pushing box is in a preset moving mode, which is easy to cause problems such as collision with the battery pack, failure to be pulled in place, etc.

### Content of the present invention

The technical problem to be solved in the present application is to overcome the defects of the prior art that the tray pushing box is in a preset moving mode, which is easy to collide with the battery pack and cannot be pulled in place, hence providing a tray pushing box, and battery swapping device and method for controlling same.

The present invention solves the technical problem by the following technical solution:

A tray pushing box, which is arranged on a battery tray of a battery swapping device and is used for pushing or pulling a battery pack between the battery tray and a battery compartment or a battery bracket in an electric vehicle, wherein the tray pushing box comprises:
a tray pushing box body, which can move on the battery tray;
a detection module, which is used for detecting a contact state between the tray pushing box body and the battery pack;
a control module, which is electrically connected to the detection module, the control module being used for controlling a movement state of the tray pushing box body, and the control module controlling the tray pushing box body to implement a corresponding movement state when the detection module detects that the contact between the tray pushing box body and the battery pack is completed.

The effect of this technical solution is that the contact state between the tray pushing box body and the battery pack is detected, and corresponding movement state control is then implemented, such that a reliable connection between the tray pushing box and the battery pack can be ensured, and situations such as collision with the battery pack, failure to be pulled in place are avoided, thereby improving the battery swapping reliability and safety of the battery swapping device.

Preferably, the tray pushing box further comprises a connection part, which is arranged on the tray pushing box body, and the connection part is used to connect with the battery pack when the tray pushing box body contacts with the battery pack.

The effect of this technical solution is that the connection between the tray pushing box body and the battery pack is realized by the contact and connection between the connection part and the battery pack, so as to facilitate the push and pull of the battery pack by movement of the tray pushing box body.

Preferably, the connection part comprises a first connection member and a second connection member, the detection module comprises a first detection module and a second detection module, the first detection module is used to detect a first contact state between the first connection member and the battery pack, and the second detection module is used to detect a second contact state between the second connection member and the battery pack.

The effect of this technical solution is to ensure the reliable contact between the tray pushing box and the battery pack by the detection of the double contact state, so as to realize the reliable connection between the tray pushing box and the battery pack.

Preferably, the first connection member can be displaced relative to the tray pushing box body, and the first detection module is used to detect a displacement state of the first connection member.

The effect of this technical solution is that the first connection member will be forced to displace after contacting with the battery pack, and the first detection module can obtain the corresponding contact state of the tray pushing box and the battery pack by detecting the displacement state of the first connection member.

Preferably, the connection part further comprises a movable part, the first connection member is connected to the tray pushing box body by the movable part, the movable part is compressible along the moving direction of the tray pushing box body, the first detection module is arranged on the compression path of the movable part, and the first detection module is used to detect the position of the first connection member to judge whether it is in the first contact state.

The effect of this technical solution is that by means of the movable part, the first connection member can move in the moving direction of the tray pushing box body, when the tray pushing box moves, the first connection member contacts with the battery pack, the movable part receives the force in the opposite direction to the moving direction of the tray pushing box body, and contracts in the opposite direction to the moving direction of the tray pushing box body, thus driving the first connection member to move in the opposite direction to the moving direction of the tray pushing box body, and then the first detection module can detect the moving position of the first connection member to judge whether it is in the first contact state.

Preferably, the second connection member is arranged on the first connection member along the direction of the tray pushing box body towards the battery bracket, and can be displaced relative to the first connection member, and the second detection module is used to detect a displacement state of the second connection member.

The effect of this technical solution is that when the battery pack is close to the tray pushing box body, the second connection member contacts with the battery pack before the first connection member contacts with the battery pack and moves relative to the first connection member, and the second detection module can detect the displacement state of the second connection member to judge whether it is in the second contact state.

Preferably, the second connection member can be movably arranged on the first connection member, the second detection module is arranged on the active path of the second connection member, and the second detection module is used to detect the position of the second connection member to judge whether it is in the second contact state.

The effect of this technical solution is to ensure the reliable contact between the tray pushing box and the battery pack by the detection of the double contact state, so as to realize the reliable connection between the tray pushing box and the battery pack.

Preferably, the movable part comprises:
a sliding structure, the first connection member is positioned on the tray pushing box body by the sliding structure, and realizes sliding of the first connection member along the moving direction of the tray pushing box body;
an elastic structure, which drives the first connection member to return to its initial position when the elastic structure exerts a force on the first connection member to make the first connection member is not in contact with the battery pack;
the first detection module is arranged on the sliding path of the sliding structure and is used to detect whether the first connection member is compressed to a preset position.

The effect of this technical solution is that the sliding structure connects with the first connection member and the tray pushing box body, the first connection member can move relative to the tray pushing box body on the sliding structure, and when the first connection member contacts with the battery pack, the first connection member is forced to slide relative to the opposite direction of the moving direction of the tray pushing box body relative to the tray pushing box body for detection by the first detection module. At the same time, the elastic structure can ensure that the first connection member is reset and extended relative to the tray pushing box body when the first connection member is in a non-contact state.

Preferably, the sliding structure comprises a support rod, one end of the support rod is connected to the tray pushing box body, and the first connection member is sleeved on the support rod and can slide on the support rod;
the elastic structure comprises an elastic element, the elastic element is sleeved on the support rod, one end of the elastic element is against the tray pushing box body, and the other end of the elastic element is against the first connection member.

The effect of this technical solution is that the first connection member is sleeved on the support rod and can slide on the support rod, the elastic element is also sleeved on the support rod, the two ends of the elastic element are respectively against the tray pushing box body and the first connection member, and when the first connection member is forced back, the elastic element will also be compressed to against the first connection member, at the same time, if the first connection member is no longer forced, the elastic element will reset the first connection member under the action of an elastic force.

Preferably, the first connection member further comprises an adsorption device, and the second connection member is arranged on an adsorption surface of the adsorption device.

The effect of this technical solution is that the adsorption force of the adsorption device is used to fixedly connect with the battery pack, with simple structure and high connection reliability, and at the same time, whether the adsorption device is adsorbed with the battery pack can be detected by the second connection member.

A battery swapping device, which comprises the tray pushing box as described above.

The effect of this technical solution is that the battery swapping device can ensure the reliable connection between the tray pushing box and the battery pack by detecting the contact state between the tray pushing box body and the battery pack and then implementing the corresponding movement state control, and situations such as collision with the battery pack, failure to be pulled in place are avoided, thereby improving the battery swapping reliability and safety of the battery swapping device.

A battery pack connection control method for a battery swapping device, wherein the battery swapping device is used to transfer a battery pack between a battery compartment and an electric vehicle, the battery pack is locked on the battery compartment or a battery bracket in the electric vehicle, the battery swapping device comprises a battery tray and a tray pushing box, and the tray pushing box is used to push or pull the battery pack between the battery tray and the battery bracket, and the battery pack connection control method comprises the following steps:
controlling the tray pushing box to move towards the battery pack;
judging whether the contact between the tray pushing box and the battery pack is completed;
if so, controlling the tray pushing box to stop moving and to connect with the battery pack.

The effect of this technical solution is to control whether the tray pushing box stops moving according to the contact state between the tray pushing box and the battery pack, so as to ensure the reliable connection between the tray pushing box and the battery pack, which can prevent the tray pushing box from stopping when it is not in contact with the battery pack, and improve the battery swapping reliability of the battery swapping device.

Preferably, the step of judging whether the contact between the tray pushing box body and the battery pack is completed comprises:
detecting a first contact state between the tray pushing box and the battery pack to obtain a corresponding first contact signal;
detecting a second contact state between the tray pushing box and the battery pack to obtain a corresponding second contact signal;
when the first contact signal and the second contact signal are obtained, it is judged that the contact between the tray pushing box and the battery pack is completed.

The effect of this technical solution is to avoid that the tray pushing box stops moving when it is not in contact with the battery pack due to the false triggering of a single signal by the determination of the double contact state, which leads to the failure of reliable connection between the tray pushing box and the battery pack, and affects the battery swapping reliability of the battery swapping device.

A battery swapping device, which is used to transfer the battery pack between the battery compartment and the electric vehicle, the battery pack is placed on the battery compartment or a battery bracket in the electric vehicle, and the battery swapping device comprises:
a battery tray;
a tray pushing box, which is movably connected to the battery tray, and is used to push or pull the battery pack between the battery tray and the battery bracket;
a control module, which is used for controlling a movement state of the tray pushing box;
a detection module, which is used to detect whether the tray pushing box is located in a preset area of the battery tray, and the detection module is electrically connected to the control module;
when the detection module detects that the tray pushing box is located in the preset area, the control module controls the tray pushing box to change the movement state.

The effect of this technical solution is that the movement state of the tray pushing box can be changed according to the different positions on the battery tray, so as to realize the real-time adjustment of the movement state of the tray pushing box at the different positions on the battery tray to quickly and accurately pull or push the battery pack, reset and stop the tray pushing box, and so on, which has higher battery swapping efficiency and better security.

Preferably, the preset area comprises at least one of the following:
the preset area comprises a deceleration area, when the detection module detects that the tray pushing box is located in the deceleration area, the control module controls the tray pushing box to decelerate;
the preset area comprises a reset area; when the detection module detects that the tray pushing box is located in the reset area, the control module controls the tray pushing box to stop;
the preset area comprises a limit area; when the detection module detects that the tray pushing box is located in the limit area, the control module controls the tray pushing box to stop.

The effect of this technical solution is that setting the deceleration area to reduce the speed of the tray pushing box can make the tray pushing box contact with the battery pack more accurately and reliably, and prevent the battery pack from colliding with the battery pack due to too excessive speed. Setting the reset area to the reset and stop of the push tray box can ensure the accuracy of the reset position of the tray pushing box and prevent the tray pushing box from deviating from the initial position to generate errors. Setting the limit area can control the emergency stop of the tray pushing box to prevent damage to the device or the battery pack due to the movement of the tray pushing box to the limit position.

Preferably, the detection module comprises a pair of a first detection member and a second detection member that cooperates with each other, the first detection member is arranged on the battery tray, and the second detection member is arranged on the tray pushing box.

The effect of this technical solution is that the first detection member cooperates with the second detection member to mark the preset area, and when the tray pushing box passes through the preset area, the second detection member on the tray pushing box can sense the first detection member on the battery tray to judge whether the tray pushing box is in the preset position.

Preferably,
The first detection member comprises a deceleration detection member, the deceleration detection member is an induction block or an induction belt, the deceleration detection member is installed on the battery tray and is set towards the tray pushing box, and forms the deceleration area.

The effect of this technical solution is that the deceleration detection member is set on the battery tray and set towards the tray pushing box, and when the tray pushing box passes through the deceleration area, it can sense the deceleration detection member to judge that the tray pushing box is in the deceleration area.

Preferably, the deceleration detection member is installed at the end of the battery tray close to the battery bracket and extends along the moving direction of the tray pushing box.

The effect of this technical solution is that the tray pushing box can reduce the speed before contacting the battery pack, and can connect with the battery pack more accurately and safely. At the same time, the deceleration detection member extends along the moving direction of the tray pushing box to make the signal continuously output in the deceleration area, and the deceleration signal is more reliable.

Preferably, the first detection member comprises a limit position detection member, which is installed at the two ends of the moving direction of the tray pushing box in the battery tray, and forms the limit area.

The effect of this technical solution is that the limit position detection member is located at both ends of the battery tray, the tray pushing box will not be triggered when it is in normal operation, and when the tray pushing box fails and moves to the limit area, the tray pushing box movement can be stopped urgently to prevent it from falling out and causing damage of the device.

Preferably, the first detection member comprises a reset detection member, which is installed between the two ends of the moving direction of the tray pushing box in the battery tray.

The effect of this technical solution is that the reset detection member is located at the starting position of the tray pushing box, and can be stopped at the starting position accurately after the tray pushing box takes back the battery pack.

Preferably, the second detection member is a proximity sensor, the second detection member is installed in a position corresponding to the first detection member in the tray pushing box, the second detection member is electrically connected to the control module, and is used to detect whether the tray pushing box is located in the preset area.

The effect of this technical solution is that the proximity sensor cooperates with the detection member, and when the tray pushing box passes through the preset area, the proximity sensor can quickly and reliably detect and judge that the tray pushing box is in the preset area.

A method for controllinga battery swapping device, which comprises the following steps:
controlling the movement generating a preset action of the tray pushing box relative to the battery tray;
the movement state of the tray pushing box is controlled according to the preset action and the position of the tray pushing box on the battery tray.

The effect of this technical solution is that the movement state of the tray pushing box can be changed according to the different positions and the different movement states on the battery tray, so as to realize the real-time adjustment of the movement state of the tray pushing box according to the different positions on the battery tray in different movement states, to quickly and accurately pull or push the battery pack, reset and stop the tray pushing box, and so on, which has higher battery swapping efficiency and better security.

Preferably,
the preset action is that the tray pushing box extends relative to the battery tray, and when the tray pushing box is located in the deceleration area, the tray pushing box is controlled to decelerate; or
the preset action is that the tray pushing box retracts from the extended state, and when the tray pushing box is in the reset area, the tray pushing box is controlled to stop.

The effect of this technical solution is that when the tray pushing box moves towards the battery bracket to grab the battery pack, the speed can be reduced when the tray pushing box is close to the battery bracket, to connect with the battery pack more accurately. When the tray pushing box is retracted after connecting with the battery pack, it can stop at the starting position more accurately.

A tray pushing box, which is arranged on a battery tray of a battery swapping device, and is used for pushing or pulling a battery pack between a battery compartment or a battery bracket in an electric vehicle and the battery tray, wherein the tray pushing box comprises:
a tray pushing box body, which is movably connected to the battery tray;
a connection part, which is arranged on the side of the tray pushing box body towards the battery bracket, and the connection part is used to connect with the battery pack;
a driving part, which is connected with the tray pushing box body, and the driving part is used to drive the tray pushing box body to move;
at least two balance parts, two sides of the connection part along the transverse direction of the tray pushing box body are respectively provided with at least one balance part, and the balance part is used to balance the movement state of the battery pack in the process of pushing or pulling the battery pack.

In this solution, the battery pack may be misaligned in the process of moving between the battery bracket and the battery tray of the battery swapping device, and the battery pack will deviate towards the connection part of the tray pushing box along both sides of the transverse direction of the tray pushing box body. Both sides of the connection part are respectively provided with at least one balance part, which can balance the movement state of the battery pack during the movement of the battery pack driven by the tray pushing box, so that the battery pack can be adjusted by the balance part no matter which side the battery pack deviates towards, to prevent the collision between the battery pack and the battery tray or battery bracket due to the deviation, reduce the wear of the battery pack, battery tray and battery bracket, and increase the reliability and safety of the battery swapping process.

Preferably, the centers of at least two balance parts are not on the same straight line as the center of the connection part.

In this solution, the above setting makes the contact surface of the balance part and the battery pack, and the contact surface of the connection part and the battery pack not in the same direction, strengthens the stability and reliability of the balance during the battery pack movement process, and reduces the deviation generated during the battery pack movement process.

Preferably, the connection part is arranged at a middle position in the transverse direction of the tray pushing box body, and the two balance parts are respectively arranged at equidistant positions on both sides of the connection part.

In this solution, the above settings make the deviation correction angles at both ends of the battery pack the same, and the battery pack can be corrected and adjusted in time no matter which direction the battery pack deviates towards.

Preferably, a connection surface of the connection part towards the battery pack is not on the same plane as a balance surface of the balance part towards the battery pack.

In this solution, the above settings make the battery pack not contact with the connection part and the balance part at the same time, so as to adapt to the moving range of the battery pack and control the allowable misalignment of the battery pack, and when the range is exceeded, it is necessary to balance the movement state of the battery pack.

Preferably, based on the moving direction of the tray pushing box body to the battery bracket, the connection part protrudes from the tray pushing box body by a first width, the balance part protrudes from the tray pushing box body by a second width, and the first width is greater than or equal to the second width.

In this solution, the connection part protrudes towards the side of the battery pack relative to the balance part, the connection part will be contacted first during the movement of the battery pack, and only when the battery pack is misaligned, the battery pack will contact with the balance part, so that the movement state of the battery pack can be adjusted to balance.

Preferably, the balance part comprises a push block, which is arranged on the side of the tray pushing box body towards the battery bracket, and the push block is used to contact with the battery pack.

In this solution, the push block is used to contact with the battery pack, the amount of misalignment of the battery pack is adjusted by pushing the battery pack to keep it in a stable state and limit the misalignment of the battery pack.

Preferably, the connection part is movable relative to the tray pushing box body.

In this solution, the activity state of the connection part is detected to judge whether the battery pack is in contact with the connection part and whether the connection between the the battery pack and the connection part is required.

Preferably, the push block is an elastic member.

In this solution, the push block is used to contact with the battery pack, when the battery pack is misaligned, the push block can adjust the movement state of the battery pack and set the push block as the elastic member, thus reducing the wear of the push block and the battery pack when they contact, reducing the force between the push block and the battery pack, and increasing the service life of the tray pushing box.

Preferably, the material of the push block is polyurethane.

In this solution, the polyurethane material has good stability, resilience and mechanical properties, and is not easy to deform after compression.

Preferably, the connection part is an adsorption device.

In this solution, the connection part is connected with the battery pack by the adsorption force, which is easy to operate, convenient to connect and disassemble, and does not need to set another connection structure to simplify the structure of the connection part and the battery pack.

A tray pushing box, which is arranged on a battery tray of a battery swapping device, and is used for pushing or pulling a battery pack between a battery compartment or a battery bracket in an electric vehicle and the battery tray, wherein the tray pushing box comprises:
a tray pushing box body, which is movably connected to the battery tray;
a connection part, which is arranged on the side of the tray pushing box body towards the battery bracket, and the connection part is used to connect with the battery pack;
a control module, which is used for controlling a movement state of the tray pushing box body;
a detection module, which is used to detect a contact state between the connection part and the battery pack, and the detection module is electrically connected to the control module.

In this solution, whether the battery pack is locked on the battery bracket is judged by detecting whether the connection part of the tray pushing box contacts with the battery pack. When the battery pack is in the unlocked state, the battery pack will move with the tray pushing box, the battery pack and the connection part will always remain connected, and the connection part will contact with the battery pack. When the battery pack is in the locked state, the battery pack is locked on the battery bracket and will not move with the tray pushing box, the battery pack and the connection part are disconnected, and the connection part is not in contact with the battery pack. The contact state between the connection part and the battery pack is directly sensed by the detection module, and the whole process is automatically operated by the machine, with high accuracy, without manual processing, saving labor costs, reducing labor hours, and improving work efficiency.

Preferably, the connection part is movable relative to the tray pushing box body, and the detection module detects a contact state between the connection part and the battery pack by detecting a movement state of the connection part.

In this solution, when the battery pack is in the unlocked state, the battery pack can move with the tray pushing box, the battery pack is kept connected with the connection part, the connection part is kept relatively static relative to the tray pushing box body, and the detection module cannot detect the movement state of the connection part. When the battery pack is in the locked state, the battery pack is locked on the battery bracket and cannot move with the tray pushing box, losing the abutment of the battery pack will cause the connection part to move relative to the tray pushing box body, and the detection module will detect the movement state of the connection part. It is highly accurate to detect whether the connection part contacts with the battery pack by the movement state of the connection part.

Preferably, the connection part comprises a detection rod, the detection module comprises a proximity sensor, and the proximity sensor is used to detect the movement state of the detection rod.

In this solution, when the battery pack is in the unlocked state, the battery pack can move with the tray pushing box, the battery pack is kept connected with the connection part, and a force is always applied to the detection rod, so that the detection rod cannot move, and the proximity sensor cannot detect the movement state of the detection rod. When the battery pack is in the locked state, the battery pack is locked on the battery bracket and cannot move with the tray pushing box, the force exerted by the battery pack on the detection rod disappears, and the detection rod moves and the movement state of the detection rod is detected by the proximity sensor.

Preferably, a surface where the connection part is attached to the battery pack is a connection surface, and the detection rod protrudes a preset length towards the direction of the battery pack compared with the connection surface.

In this solution, when the battery pack is in the unlocked state, the connection surface is always attached to the battery pack, and the above settings make the battery pack always exert a force on the detection rod during the connection process of the battery pack and the connection surface, so that the detection rod cannot move. When the battery pack is in the locked state, the battery pack does not attached to the connection surface, the above settings make the force of the battery pack exerted on the detection rod disappear, and the detection rod can move. The proximity sensor detects the contact state between the connection part and the battery pack by detecting the movement state of the detection rod.

A battery pack locking judgment method, which is implemented based on the above tray pushing box, the connection part comprises an adsorption device, the battery pack locking judgment method is used to judge whether the battery pack is locked on the battery bracket, wherein the battery pack locking judgment method comprises the following steps:
step S 1: controlling an adsorption force of the tray pushing box on the battery pack to reach a preset value;
step S2: controlling the tray pushing box to return a preset distance to judge the locking state of the battery pack.

In this solution, utilizing the function that the battery pack can be adsorbed by the tray pushing box, and after the battery pack is locked in the battery bracket, the tray pushing box adsorbed on the battery pack moves outward to detect whether the battery pack will be removed from the battery bracket again with the tray pushing box, thus realizing the purpose of judging the locking state of the battery pack. The solution is realized by using the existing structure and is simple and reliable.

Preferably, the connection part further comprises a detection rod, the detection module comprises a proximity sensor, the detection rod is movable relative to the tray pushing box body and used to contact with the battery pack, and the proximity sensor is used to detect the movement state of the detection rod;
in the step S2, judging whether the battery pack is locked on the battery bracket by detecting whether the proximity sensor detects the movement state of the detection rod;
when the proximity sensor detects the movement state of the detection rod, it is judged that the battery pack is locked successfully; when the proximity sensor does not detect the movement state of the detection rod, it is judged that the battery pack fails to be locked.

In this solution, when the battery pack fails to be locked, the battery pack is always attached to the connection surface under the action of the adsorption force of the tray pushing box, and a force is always applied to the detection rod, so that the detection rod cannot move, and the proximity sensor cannot detect the movement state of the detection rod. When the battery pack is locked successfully, the battery pack will not move even under the action of the adsorption force of the tray pushing box, and the battery pack and the tray pushing box are disconnected disconnected and separated, the battery pack and the connection part are not in contact, the force exerted by the battery pack on the detection rod disappears, so that the detection rod can move and the movement state of the detection rod is detected by the proximity sensor.

Preferably, in the step S2, the preset distance that the tray pushing box returns is greater than or equal to the moving stroke of the detection rod relative to the tray pushing box body.

In this solution, because the connection surface of the detection rod relative to the connection part protrudes towards the battery pack, the detection rod is always in the compressed state before the tray pushing box is not returned, and the above operation enables the detection rod to return to the initial position, so as to prevent the proximity sensor from mistakenly detecting the state of the detection rod and judge the contact between the connection part and the battery pack, and enhance the accuracy of the battery pack locking judgment method.

Preferably, in the step S2, when the result of judging the locking state of the battery pack is that the battery pack is locked successfully, the following step is further comprised: controlling the tray pushing box to return.

In this solution, when the battery pack is determined to be locked successfully, the tray pushing box is controlled to return to the initial position to end the battery swapping operation and ensure the reliability of the battery swapping process.

Preferably, after controlling the tray pushing box to return, the following step is further comprised: controlling a double extension mechanism of the battery swapping device to return.

In this solution, after the tray pushing box is returned, the double extension mechanism of the battery swapping device is controlled to return, thus completing the operation of transporting the battery pack once and ensuring the reliability of the battery swapping process.

Preferably, in the step S2, when the result of judging the locking state of the battery pack is that the battery pack fails to be locked, locking the battery pack on the battery bracket again, and performing the step S 1 and the step S2.

In this solution, when the battery pack fails to be locked, it is necessary to lock the battery pack on the battery bracket again to prevent the movement of the battery pack on the battery bracket, so as to ensure that the battery pack can normally power or charge the electric vehicle.

The positive progressive effect of the present invention is that the contact state between the tray pushing box body and the battery pack is detected, and corresponding movement state control is then implemented, such that a reliable connection between the tray pushing box and the battery pack can be ensured, and situations such as collision with the battery pack, failure to be pulled in place are avoided, thereby improving the battery swapping reliability and safety of the battery swapping device.

### Brief description of the drawings:

Fig. 1 is a three-dimensional structure schematic view of the battery swapping device in an embodiment of the present invention.
Fig. 2 is a three-dimensional structure schematic view (1) of the battery tray in an embodiment of the present invention.
Fig. 3 is a front schematic view of the battery swapping device in an embodiment of the present invention.
Fig. 4 is a three-dimensional structure schematic view (2) of the battery tray in an embodiment of the present invention.
Fig. 5 is a partial enlarged view of Part A in the Fig. 4.
Fig. 6 is a partial structure schematic view of the battery tray in an embodiment of the present invention.
Fig. 7 is a top schematic view of the battery tray in an embodiment of the present invention.
Fig. 8 is a partial enlarged view of Part C in the Fig. 7.
Fig. 9 is a schematic view of the connection relationship between a battery tray and a battery pack in an embodiment of the present invention.
Fig. 10 is a schematic view (1) of the position relationship between a battery tray and a battery pack in an embodiment of the invention.
Fig. 11 is a schematic view (2) of the position relationship between a battery tray and a battery pack in an embodiment of the invention.
Fig. 12 is a schematic view (3) of the position relationship between a battery tray and a battery pack in an embodiment of the invention.
Fig. 13 is a three-dimensional structure schematic view (3) of the battery tray in an embodiment of the present invention.
Fig. 14 is a partial enlarged view of Part D in the Fig. 13.
Fig. 15 is a partial enlarged view of Part B in the Fig. 4.
Fig. 16 is a partial structure schematic view of the battery tray and a battery pack in an embodiment of the present invention.
Fig. 17 is a three-dimensional structure schematic view (3) of the battery tray in an embodiment of the present invention.

### Description of reference numerals:

sky rail 701; ground rail 702; sky rail guide wheel 703; ground rail guide wheel 704; first vertical driver 61; second vertical driver 62; battery swapping actuator 803; first chain 706; first sprocket 611; second chain 621; second sprocket 622; battery tray 803; rotary table 811; rotary driver 812; device frame 1; unlocking mechanism 21; tray pushing box 22; tray pushing box body 22a; connection part 23; adsorption device 231; adsorption surface 2311; first connection member 232; sensing end 232a; second connection member 233; detection rod 2331; return spring 2332; movable part 234; support rod 2341; elastic element 2342; retract detection sensor 235; first detection module 241; second detection module 242; deceleration detection member 243a; reset detection member 243b; limit detection member 243c; second detection member 244; balance part 25; push block 251; switching structure 252; double extension mechanism 3; side guide wheel 4; battery pack 100

### Detailed description of the preferred embodiment

The following embodiments further illustrate the present invention, but the present invention is not limited by the following embodiments thereto.

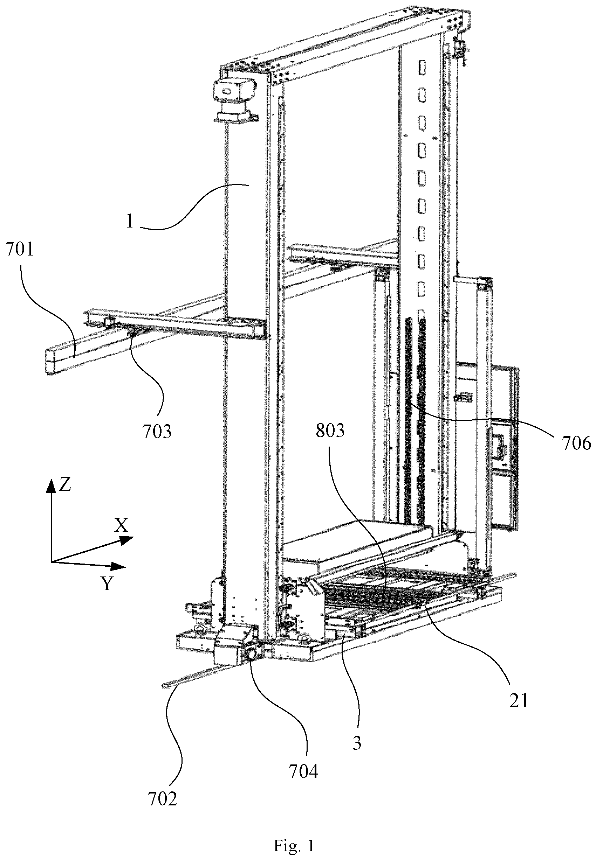

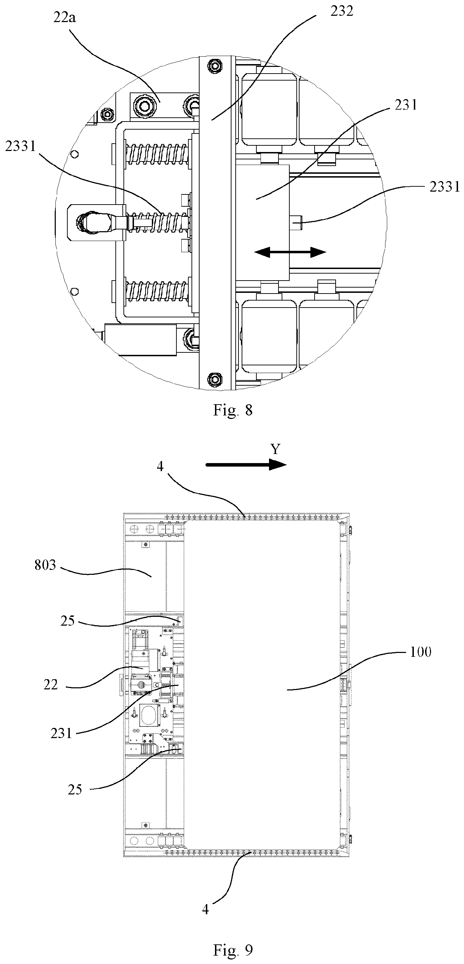

As shown in Fig. 1 to Fig. 3, the embodiment provides a battery swapping device, which is used to dock with a battery bracket (not shown in the figure) to take and place a battery pack 100 (see Fig. 9), the battery swapping device comprises a battery tray 803 used to perform the battery pack replacement operation, and when the electric vehicle to be replaced stops, the battery swapping device should complete the positioning and alignment operation with the battery bracket on the electric vehicle that fixes the battery pack, and the positioning and alignment process involves the position adjustment of the three dimensional directions of the battery tray, specifically the X, Y and Z directions as shown in Fig. 1. X direction refers to the direction parallel to the driving direction of the electric vehicle; Y direction refers to the direction that the battery tray towards the body of the electric vehicle, and the battery tray and the battery bracket of the electric vehicle reach the corresponding state by the adjustment of Y direction; Z direction refers to the height direction of the battery tray, and the height of the battery tray is aligned with the height of the battery tray on the electric vehicle by the adjustment of Z direction. The battery swapping device specifically comprises a device frame 1, a battery tray 803, and a position adjustment mechanism, the battery tray 803 is used to place the battery pack which is used for battery swapping operation, and can move relative to the battery tray 803 (see Fig. 1, which moves in the Y direction in this embodiment) to achieve the purpose of taking out or placing the battery pack from the battery tray along the Y direction.

The position adjustment mechanism comprises a rotary mechanism, a horizontal moving mechanism and a vertical moving mechanism, which are used to adjust the position and angle of the battery tray 803 relative to the battery bracket.

The rotary mechanism is used to adjust the angle of the battery tray 803 according to the obtained angular rotation amount, until the components on the battery tray 803 reach the preset angle, and the horizontal moving mechanism is used to adjust horizontally according to the obtained horizontal displacement amount, and the vertical moving mechanism is used to adjust vertically according to the obtained vertical displacement amount, until the components on the battery tray 803 reach the preset relative position relative to the battery bracket. Specifically, to reach the position that the unlocking mechanism on the battery tray 803 is aligned with the unlocking member on the battery bracket.

Wherein the rotary mechanism specifically comprises a rotary table 811 and a rotary driver 812, the rotary table 811 is sleeved on the bottom of the battery tray 803, the rotary driver 812 is connected to the rotary table 811 and is used for driving the rotary table 811 to drive the battery tray 803 to rotate according to the angular rotation amount, so as to adjust the attitude of the battery tray 803 by rotating the rotary mechanism after obtaining the parking state of the battery swapping vehicle to be replaced and the accurate angular deviation of the battery swapping position, thus, the posture of the battery tray 803 is matched with the parking state of the battery swapping vehicle to be replaced, so that the components on the battery tray 803 are aligned with the battery bracket, so as to achieve efficient and accurate battery swapping operation.

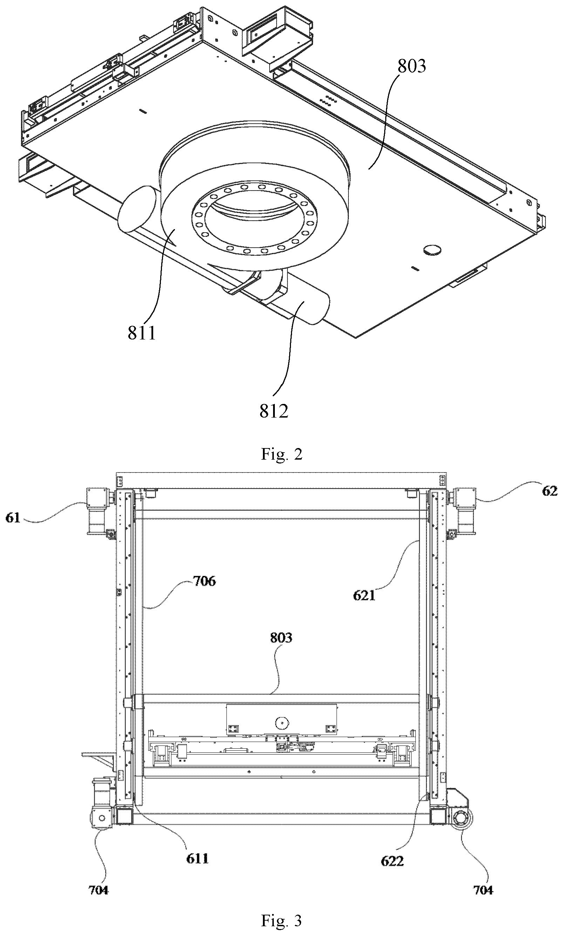

The horizontal moving mechanism specifically comprises a track, a guide wheel and a horizontal driver, and the horizontal driver is used to drive the guide wheel to move along the track according to the horizontal displacement. As shown in Fig. 2, the track comprises a sky rail 701 and a ground rail 702, and the guide wheel includes a sky rail guide wheel 703 and a ground rail guide wheel 704. The sky rail guide wheel 703 is set corresponding to the sky rail 701, and the ground rail guide wheel 704 is set corresponding to the ground rail 702. The horizontal drivers respectively drive the sky rail guide wheel 703 to move along the sky rail 701 in the X axis (that is, horizontal direction), and drive the ground rail guide wheel 704 to move along the ground rail 702, thus realizing the horizontal movement of the overall battery swapping device. As can be seen from Fig. 1, the X axis, Y axis and Z axis are perpendicular to each other. The battery swapping device can move the battery tray 803 according to the obtained horizontal displacement, which can make the battery tray 803 match the position of the battery bracket of the battery swapping vehicle to be replaced in the horizontal direction, with high accuracy, and provide a guarantee for accurate handling of the battery pack. In the embodiment, the horizontal driver can automatically drive the battery tray 803 to move in the horizontal direction according to the horizontal displacement, and the efficiency and stability of the battery tray 803 moving in the horizontal direction can be improved by the cooperation of the track and the guide rail.

The vertical moving mechanism specifically comprises a first vertical driver 61, a second vertical driver 62, a first lifting mechanism, a second lifting mechanism and the battery tray 803, the first vertical driver is connected to the first lifting mechanism, the second vertical driver is connected to the second lifting mechanism, and the first lifting mechanism and the second lifting mechanism are respectively connected to the two ends of the battery tray 803 to drive the two ends of the battery tray 803 to move up and down; the first vertical driver is used to drive the first lifting mechanism according to a first vertical displacement detected by the battery swapping device, and the second vertical driver is used to drive the second lifting mechanism according to a obtained second vertical displacement.

Specifically, the first lifting mechanism comprises a first chain 706 and a corresponding first sprocket 611, and driven by the first vertical driver 61, the first chain 706 drives the first sprocket 611 to move along the Z axis direction (that is, the vertical direction) to drive the battery tray 803 to move along the vertical direction. The second lifting mechanism comprises a second chain 621 and a corresponding second sprocket 622, and the second chain 621 drives the second sprocket 622 to move along the vertical direction under the drive of the second vertical driver 62 to drive the battery tray 803 to move along the vertical direction. If there is a deviation between the parking state of the battery swapping vehicle to be replaced and the accurate battery swapping position in the vertical direction, then moving the battery tray 803 according to the obtained vertical displacement, which can make the battery tray 803 match the position of the battery bracket of the battery swapping vehicle to be replaced in the vertical direction, with high accuracy, and provide a guarantee for accurate unlocking.

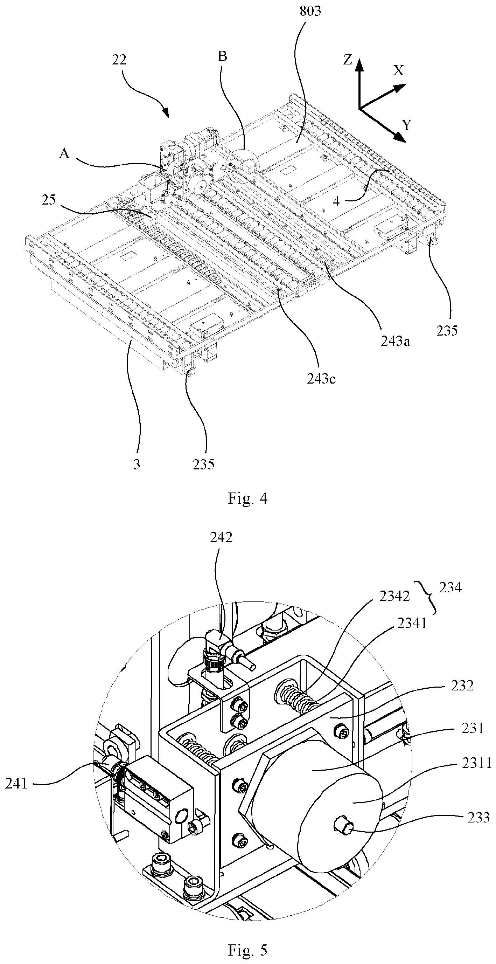

As shown in Fig. 4 to Fig. 6, the battery tray 803 is provided with a double extension mechanism 3, an unlocking mechanism 21 and a tray pushing box 22. Wherein, the tray pushing box 22 moves along the Y direction relative to the battery tray 803 to realize the function of taking out and placing the battery pack, the tray pushing box 22 comprises a tray pushing box body 22a and a connection part 23, which is arranged on a surface of the tray pushing box body 22a towards one side of the battery bracket, and the connection part 23 can connect with the battery pack when contacting with the battery pack to realize the function of taking the battery pack out of the battery bracket. The unlocking mechanism 21 is used for docking with an unlocking member on the battery bracket to achieve the purpose of controlling the unlocking/locking state of the unlocking mechanism 21 on the battery bracket.

The tray pushing box 22 is arranged on the battery tray 803 of the battery swapping device, the tray pushing box 22 further comprises a driving part, the connection part 23 can connect with the battery pack when contacting with the battery pack, and can also realize the function of taking the battery pack out of the battery bracket, and the driving part is connected with the tray pushing box body to drive the tray pushing box body to move.

The tray pushing box 22 can comprise a detection module and a control module, wherein the detection module is used to detect the contact state between the tray pushing box body 22a and the battery pack; the control module is electrically connected to the detection module, and the control module comprises the driving part of the tray pushing box 22 and is used to control the movement state of the tray pushing box body 22a. When the detection module detects that the contact between the tray pushing box body 22a and the battery pack is completed, the control module controls the driving part to drive the tray pushing box body 22a to implement a corresponding movement state.

The double extension mechanism 3 is used to drive the battery tray 803 to approach the battery bracket, the starting time of the double extension mechanism 3 can be arranged after the battery swapping device reaches the preset relative position relative to the battery bracket, so that the double extension mechanism 3 can accurately move the battery tray 803 to approach the battery bracket.

After the battery tray 803 is driven by the double extension mechanism 3 and close to the battery tray 803, if the battery pack is to be unlocked and taken out from the battery bracket, two processes can be performed respectively: one is to control the tray pushing box 22 to move towards the direction of the battery pack, and judge whether the contact between the tray pushing box 22 and the battery pack is completed; the other is to control the unlocking mechanism 21 to unlock or lock the battery bracket.

In the embodiment, the first process can be performed first, that is, controlling the tray pushing box 22 to move towards the direction of the battery pack, and judging whether the contact between the tray pushing box 22 and the battery pack is completed. A preferred implementation structure of the battery tray 803 and the tray pushing box 22 is provided here to judge whether the contact between the tray pushing box 22 and the battery pack is completed.

The tray pushing box 22 comprises a detection module and a control module, wherein the detection module is used to detect the contact state between the tray pushing box body 22a and the battery pack; the control module is electrically connected to the detection module, the control module being used for controlling a movement state of the tray pushing box body 22a, and the control module controlling the tray pushing box body 22a to implement a corresponding movement state when the detection module detects that the contact between the tray pushing box body 22a and the battery pack is completed.

When the battery pack 100 is in the unlocked state, the battery pack 100 will move with the tray pushing box 22, the battery pack 100 and the connection part 23 will always remain connected, and the connection part 23 will contact with the battery pack 100. When the battery pack 100 is in the locked state, the battery pack 100 is locked on the battery bracket and will not move with the tray pushing box 22, the battery pack 100 and the connection part 23 are disconnected, and the connection part 23 is not in contact with the battery pack 100. The contact state between the connection part 23 and the battery pack 100 is directly sensed by the detection module, and the whole process is automatically operated by the machine, with high accuracy, without manual processing, saving labor costs, reducing labor hours, and improving work efficiency.

In the embodiment, the connection part 23 can move along the Y direction relative to the tray pushing box body 22a, and judging the contact state and connection state between the connection part 23 and the battery pack based on the displacement on the connection part 23 detected by the detection module.

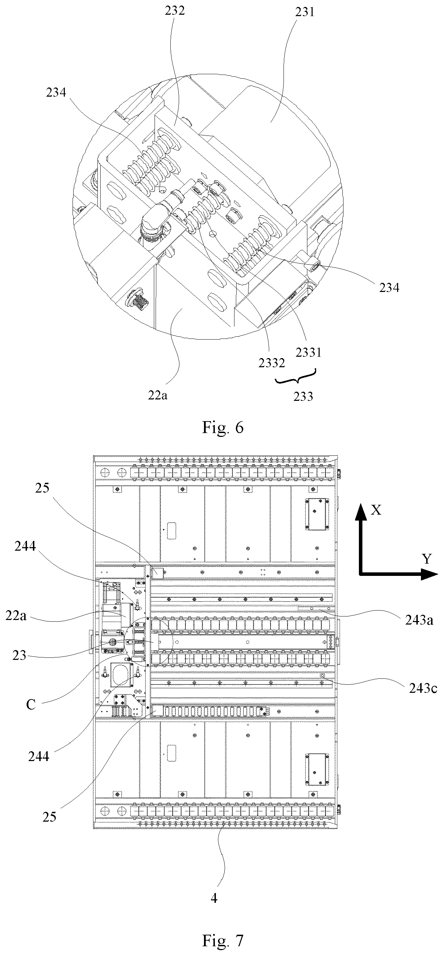

Specifically, as shown in Fig. 5 and Fig. 6, the connection part 23 comprises a first connection member 232 and a second connection member 233, the detection module correspondingly comprises a first detection module 241 and a second detection module 242, an adsorption device 231 used to realize the adsorption connection function in the connection part 23 is arranged on the first connection member 232, and the second connection member 233 is arranged on an adsorption surface 2311 of the adsorption device 231. The first detection module 241 is used to detect a first contact state between the first connection member 232 and the battery pack, and the second detection module 242 is used to detect a second contact state between the second connection member 233 and the battery pack.

In the embodiment, both the first detection module 241 and the second detection module 242 are sensors, and generate signals after the corresponding first connection member 232 and the second connection member 233 contact with the battery pack. Specifically, the second detection module 242 is arranged on the adsorption surface 2311 of the adsorption device 231 to generate signals when the adsorption surface 2311 is close to the battery pack (that is, the second contact state). Therefore, the signal generated by the second detection module 242 is an initial contact signal, after the initial contact signal is sent to the control module, and the control module can know that the tray pushing box 22 has approached the battery pack. In the embodiment, after the control module obtains the initial contact signal generated by the sensor of the second detection module 242, it will not materiality change the movement state of the tray pushing box 22.

The first detection module 241 is arranged on the tray pushing box body 22a, and is used to generate signals based on the movement of the first connection member 232 (that is, in the first contact state) after the adsorption device 231 arranged on the first connection member 232 fully contacts with the battery pack. Therefore, the signal generated by the first detection module 241 is an attaching signal, after the attaching signal is sent to the control module, the control module can know that (the adsorption surface 2311 of the adsorption device 231 of) the tray pushing box 22 has fully contacted with the battery pack, and at this time, the control module can control the tray pushing box 22 to stop moving, so as to realize the purpose of accurate displacement control. The contact state between the tray pushing box body 22a and the battery pack 100 is detected, and corresponding movement state control is then implemented, such that a reliable connection between the tray pushing box 22 and the battery pack 100 can be ensured, and situations such as collision with the battery pack, failure to be pulled in place are avoided, thereby improving the battery swapping reliability and safety of the battery swapping device.

Preferably, the control module can be set to judge that the contact between the tray pushing box 22 and the battery pack is complete only when the initial contact signal and the attaching signal are obtained, so as to further implement the operation of controlling the tray pushing box 22 to stop moving. The purpose of this control solution is to prevent the tray pushing box 22 from stopping when it is not in contact with the battery pack due to the false triggering of one of the first detection module 241 and the second detection module 242. In addition, it is further preferred that after the control module obtains the initial contact signal, the tray pushing box 22 can also be controlled to move slowly first, so that the tray pushing box 22 can contact with the battery pack at a lower speed.

As shown in Fig. 5, one side of the first connection member 232 towards the battery bracket is provided with an adsorption device 231, and the first connection member 232 can move along the Y direction relative to the tray pushing box body 22a, so that the first detection module 241 can detect the displacement state of the first connection member 232 to obtain the above attaching signal sent to the control module. Specifically, the connection part 23 further comprises a movable part 234, the first connection member 232 can move relative to the tray pushing box body 22a by connecting with the movable part 234, the movable part 234 can also make the first connection member 232 compressible in the direction of moving direction of the tray pushing box body 22a, and the sensor of the first detection module 241 is arranged on the compression path of the movable part 234 to detect the displacement of the first connection member 232, so as to judge whether it is in the first contact state.

The adsorption device 231 is movable relative to the tray pushing box body 22a, and by detecting the activity state of adsorption device 231 to judge whether the battery pack is in contact with the connection part, and then judge the connection between the the battery pack and the connection part is required. The adsorption surface 2311 of the adsorption device 231 is used to attach to the battery pack 100, and the connection part 23 is connected with the battery pack 100 by the adsorption force, which is easy to operate, convenient to connect and disassemble, and does not need to set another connection structure to simplify the structure of the connection part and the battery pack.

Wherein the movable part 234 specifically comprises a sliding structure and an elastic structure, the first connection member 232 is positioned on the tray pushing box body 22a by the sliding structure of the movable part 234, and the sliding structure, the elastic structure and the first connection member 232 jointly form a movable and compressible floating plate structure relative to the tray pushing box body 22a, so that the adsorption device 231 fixed on the first connection member 232 can float relative to the tray pushing box body 22a along the Y direction. The elastic structure can ensure that the first connection member 232 is reset and extended relative to the tray pushing box body 22a when the first connection member is in a non-contact state.

When the battery pack contacts with the adsorption device 231, the sliding structure guides the first connection member 232 equipped with the adsorption device 231 to move along the sliding path (that is, Y direction), the first detection module 241 is arranged on the sliding path of the sliding structure and is used to detect whether the first connection member 232 is compressed to the preset position, and if the first connection member 232 is compressed to the preset position, the attaching signal is generated to the control module. The elastic structure drives the first connection member 232 to return to the initial position (that is, the position of the first connection member 232 in Fig. 8) when the elastic structure exerts a force on the first connection member 232 to make the adsorption device 231 on the first connection member 232 is not in contact with the battery pack.

Specifically, as shown in Fig. 5 and Fig. 6, the sliding structure comprises four support rods with tail end limit, one end of theses support rods are connected to the tray pushing box body 22a, and the first connection part 23 is sleeved on the other end of the support rod by the through hole on surface of the first connection part to achieve the purpose of sliding the first connection part on the support rod. The elastic structure comprises a elastic element 2342, which is spiral spring in the embodiment, the number of the elastic element 2342 is the same as that of the support rod, the elastic elements 2342 are respectively sleeved on the support rods, one end of the elastic element 2342 is against the tray pushing box body 22a, and the other end of the elastic element 2342 is against the first connection part 23, so that the approaching action of the first connection part 23 relative to the tray pushing box body 22a can compress the elastic element 2342, and if the first connection member 232 is no longer forced, the elastic element 2342 will reset the first connection member 232 under the elastic force. In the embodiment, the first detection module 241 comprises a proximity sensor, which detects the movement state of the tail end of the support rod to judge the first contact state and generate an attaching signal.

As shown in Fig. 6, the second connection member 233 is arranged on the first connection member 232 along the direction of the tray pushing box body 22a towards the battery bracket, and the second connection member 233 can detect the initial contact signal when the second connection member 233 is displaced by the way of displacement of the second connection member relative to the first connection member 232.

The second connection member 233 comprises a detection rod 2331, which passes through the adsorption device 231 and protrudes from the adsorption surface 2311 of the adsorption device 231 at the initial position (that is, the position of the detection rod 2331 in Fig. 8), the setting solution of the second connection member 233 has simple structure and high connection reliability, the detection rod 2331 can move relative to the adsorption device 231 along the Y direction, while the second detection module 242 is arranged on the active path of the detection rod 2331, and the corresponding signal is generated based on the movement situation of the detection rod 2331 to detect whether the adsorption device 231 is adsorbed with the battery pack.

Specifically, when the tray pushing box 22 is close to the battery pack, the tail end of the detection rod 2331 will first contact with the battery pack and then be compressed to generate the initial contact signal. After that, when the battery pack contacts with the adsorption surface 2311 of the adsorption device 231, the adsorption device 231 and the first connection member 232 can be further compressed to generate the attaching signal.

In addition, the second detection module 242 also comprises a proximity sensor, the proximity sensor of the second detection module 242 detects the movement state of the tail end of the detection rod 2331 to judge the second contact state and generate an initial contact signal. In the embodiment, the length of the detection rod 2331 is long, and its tail end passes through the first connection member 232 and the part of the tray pushing box body 22a which is used for the first connection member 232, the preferred setting position of the proximity sensor of the second detection module 242 is shown in Fig. 6 and is used to detect the displacement of tail end the detection rod 2331, and a return spring 2332 is also arranged on the detection rod 2331, to drive the detection rod 2331 to return to the initial position when the detection rod 2331 does not contact with the battery pack.

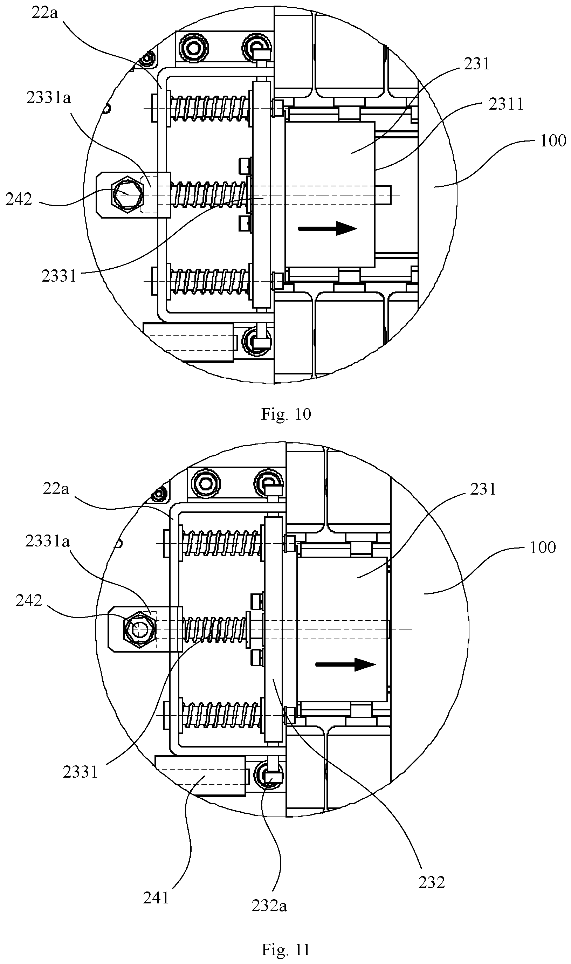

As shown in Fig. 10, it is a schematic view of the position relationship between the battery tray and the battery pack when the tray pushing box body 22a moves and approaches the battery pack 100 in the direction of the arrow in the figure. It can be seen from the figure that the tail end of the detection rod 2331 is set up protruding from the adsorption surface 2311, so that when the detection rod 2331 contacts with the battery pack, the detection rod 2331 moves towards the direction of the second detection module 242, and the second detection module 242 is arranged on the end 2331a on the other side of the detection rod 2331.

As shown in Fig. 11, when the tray pushing box body 22a moves along the direction of the arrow towards the battery pack 100, the detection rod 2331 contacts with the battery pack 100 and is compressed, so that the second detection module 242 can detect the displacement of the end 2331a of the detection rod 2331, thus generating an initial contact signal.

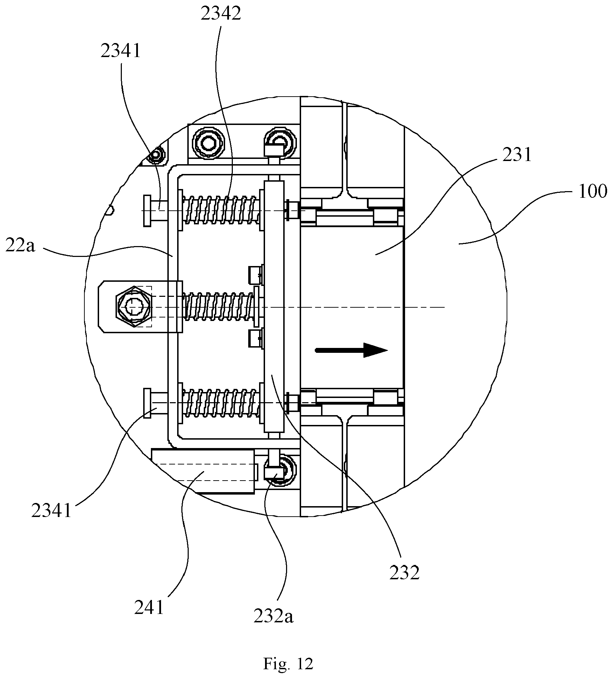

Later, as shown in Fig. 12, in the process that the tray pushing box body 22a continues to move towards the battery pack 100 in the direction of the arrow, since the battery pack 100 is completely fixed on the battery bracket, the thrust of the tray pushing box body 22a on the battery pack 100 becomes the reaction force that compresses the elastic element 2342 on the support rod 2341, so that the first connection member 232 and the adsorption device 231 move backward, and make the end 232a to be detected fixed on both sides of the first connection member 232 move towards the direction close to the first detection module 241, so that the first detection module 241 can detect the displacement of the end232a to be detected and generate an attaching signal. It can be seen from Fig. 12 that when the attaching signal is generated, the battery pack 100 must have attached to the adsorption device 231.

After the adsorption device 231 on the tray pushing box 22 fully contacts with the battery pack 100, the adsorption device 231 is powered on to absorb the iron block on the battery pack 100. At this time, the procedure of powering on the adsorption device 231 can be performed first, and after a delay of at least 1 second, after ensuring that the adsorption device 231 has fully absorbed the battery pack 100, the subsequent procedure of controlling the unlocking device to unlock the battery pack can be performed to ensure that the battery pack is reliably and safely connected to the tray pushing box 22.

Wherein, the specific structure and principle of the unlocking mechanism 21 belong to the scope of the prior art, so it will not be repeated here.

Then, controlling the tray pushing box 22 to move back, as shown in Fig. 9, to move the battery pack 100 to the battery tray 803 by the tray pushing box 22, during the process of moving the battery pack 100 back to the battery tray 803, a first image and a second image in at least two positions on the battery bracket can be collected by the image acquisition module which is arranged on the battery tray 803, and the vertical adjustment amount can be generated based on this, and the purpose of adjusting the height of the battery swapping device to match the height of the battery bracket during the removal of the battery pack is realized by the vertical moving mechanism. Of course, in the process of executing the battery pack installation method, when the tray pushing box 22 pushes the battery pack into the battery bracket, the height position between the battery tray 803 and the battery bracket can be adjusted in real time by obtaining the vertical adjustment amount, so as to prevent the battery pack from getting stuck during the translation process of moving in or out.

In addition, after the battery pack is completely retrieved, the tray pushing box 22 stops moving. At this time, the double extension mechanism 3 can be retracted, and after the double extension mechanism 3 retracts, a retract detection sensor 235 vertically arranged at the front end of the battery tray 803 can be provided for detecting whether the double extension mechanism 3 is completely retracted. Specifically, after the double extension mechanism 3 is fully retracted, any object should not be detected within the detection range of the retract detection sensor 235, and if so, it is judged that the retraction is successful and the subsequent steps can be performed.

When the battery pack installation process is performed by the battery swapping device, the working principle of each component is basically the same as that of the battery pack removal process, so the details are not repeated here.

However, the above detection module used to generate the attaching signal and initial contact signal can also have and perform different functions during the installation process of the battery pack than during the removal process of the battery pack.

During the installation process of the battery pack, the tray pushing box 22 needs to push the battery pack to move, so as to push the battery pack to the battery bracket. Wherein, the attaching signal generated by the first detection module 241 can be used as the basis for judging whether the battery pack has been pushed to the battery bracket. Specifically, the elastic element can be set hard so that the resistance caused by the sliding of the battery pack cannot make the elastic element compressed during the process of pushing the battery pack to move by the adsorption device 231, thus making the attaching signal generated by the first detection module 241. When the tray pushing box 22 pushes the battery pack to the battery bracket and into place, the battery pack cannot move, at this time, the force acting on the elastic element increases, so that the first connection member 232 compressed to generate an attaching signal, and the control module controls the tray pushing box 22 to stop moving based on the above attaching signal, so that the tray pushing box 22 has the advantage of being able to push the battery pack into place and stop accurately during the installation process of the battery pack.

The embodiment also provides a battery pack 100 locking judgment method for judging whether the battery pack 100 is locked on the battery bracket.

During the installation process of the battery pack, after the unlocking mechanism 21 locks the battery pack on the battery bracket, the initial contact signal generated by the second detection module 242 can be used as the basis for judging whether the battery pack has been locked on the battery bracket.

First of all, change the adsorption force of the adsorption device 231 to the battery pack, for example, the power supply voltage of the adsorption device 231 is 24V, the adsorption force generated at this time is 80kg, and at this time, reducing the power supply voltage of the adsorption device 231 to 5V, and the adsorption force is correspondingly reduced to 10kg. At this time, although the adsorption device 231 maintains the adsorption connection with the battery pack, the firmness of the adsorption connection is relatively low.

After that, controlling the tray pushing box 22 to return to a certain distance, and detecting whether the initial contact signal is sent, and judging whether the battery pack is locked successfully or failed based on this.

Specifically, if the initial contact signal of the second connection member 233 is detected, it indicates that there is still an object on the adsorption surface 2311 of the adsorption device 231, and at this time, based on the received initial contact signal, it can be considered that the battery pack is still adsorbed on the adsorption device 231, so the locking mechanism of the battery bracket has not been successfully locked. At this time, the unlocking mechanism 21 and the tray pushing box 22 on the battery tray 803 can continue to be controlled to perform the battery pack installation procedure.

If the initial contact signal is not detected, it indicates that there is no object on the adsorption surface 2311 of the adsorption device 231, it can be considered that the battery pack is not adsorbed on the adsorption device 231, and the locking mechanism of the battery bracket is successfully locked, resulting in the separation of the battery pack and the adsorption device 231 under the adsorption force of 10kg. At this time, the tray pushing box 22 can be controlled to continue to return, and then the double extension mechanism 3 of the battery compartment can be controlled to return.

Wherein, reducing the adsorption force to 10kg is only a relatively preferred adsorption parameter in the embodiment, and connecting the battery pack with other adsorption forces can also achieve the above purpose. Further, although the tray pushing box 22 in the embodiment is connected to the battery pack by adsorption, in other embodiments, the connection part 23 can also be connected to the battery pack by other connection methods, and the connection condition between the connection part 23 and the battery pack is detected based on the condition that the push tray box 22 returns to a certain distance, so as to achieve the same purpose of detecting and judging whether the battery pack is locked successfully or the battery pack fails to be locked.

In addition, in the step of controlling the tray pushing box 22 to return a certain distance, the so-called distance should be greater than the travel of the detection rod 2331. In the embodiment, on this basis, it should also be greater than the travel of the support rod, so that the first connection member 232 and the second connection member 233 are in their respective initial positions (see Fig. 8), so as to avoid that the first connection member 232 and the second connection member 233 are not moved in place and still in the compressed state, which leads to that although the battery pack has separated from the adsorption surface 2311, the first detection module 241 and the second detection module 242 can still generate corresponding signals.

In addition, as shown in Fig. 4 and Fig. 7, in the tray pushing box 22 of the embodiment, the detection module can also be used to detect whether the tray pushing box 22 is located on a preset area of the battery tray 803, and when the detection module detects that the battery tray 803 is located on the preset area, the detection module can send a signal to the control module that is electrically connected to the detection module, so that the control module can change the movement state of the tray pushing box 22. Wherein, the so-called movement state includes acceleration, deceleration, stop and so on.

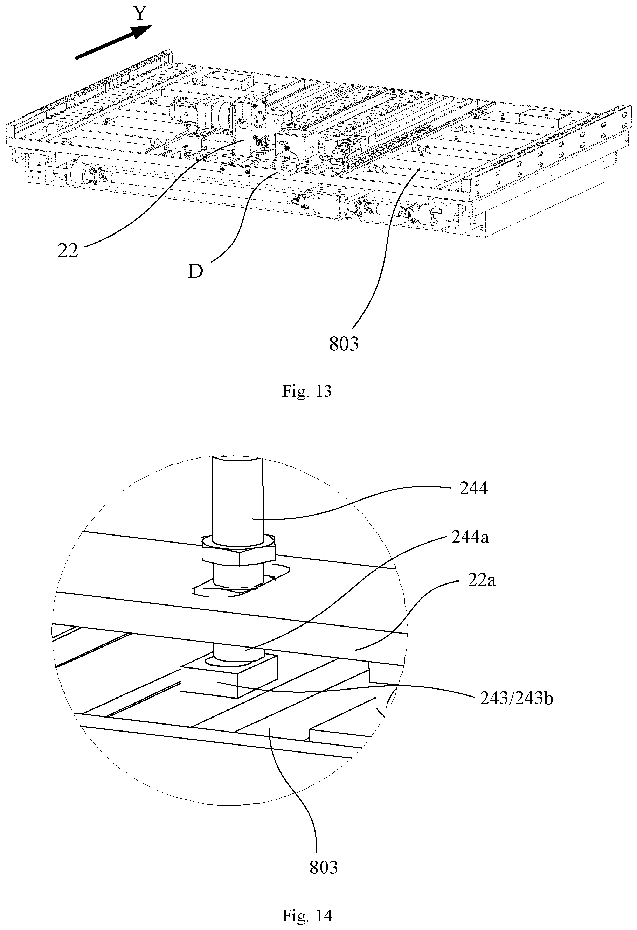

Specifically, in the embodiment, as shown in Fig. 14, the detection module comprises a pair of a first detection member 243 and a second detection member 244 that cooperates with each other, wherein the first detection member 243 is arranged on the battery tray 803, and the second detection member 244 is arranged on the tray pushing box 22. Specifically, the first detection member 243 is an induction block or induction belt, and is arranged on a surface of the battery tray 803 towards the side of the tray pushing box body 22a, to form a so-called preset area on the surface of the battery tray 803. The movement state of the tray pushing box can be changed according to the different positions on the battery tray, so as to realize the real-time adjustment of the movement state of the tray pushing box at the different positions on the battery tray to quickly and accurately pull or push the battery pack, reset and stop the tray pushing box, and so on, which has higher battery swapping efficiency and better security.

Specifically, as shown in Fig. 14, the second detection member 244 in the embodiment is a proximity sensor, and the detection end 244a at its tail end is set towards the surface of the battery tray 803 to detect the preset area formed by the first detection member 243, and judge whether the tray pushing box 22 is located in the preset area based on whether the second detection member 244 sends an inductive signal. When the detection end 244a of the second detection member 244 is close to the first detection member 243, the second detection member 244 can generate a corresponding signal to enable the control module to change the movement state of the tray pushing box 22 and achieve the purpose of accurate control.

Specifically, the preset area in the embodiment comprises a deceleration area, reset area and limit area. Wherein, these areas are formed by different first detection members 243 and detected by different second detection members 244 respectively.

As shown in Fig. 7, the first detection member 243 used to form the deceleration area is a deceleration detection member 243a, which is arranged on the side of the battery tray 803 towards the tray pushing box 22 and approach to the battery bracket. Specifically, it can be seen from Fig. 7 that the specific shape of the deceleration detection member 243a is elongated and extends along the moving direction of the tray pushing box 22 towards the battery bracket, and when the second detection member244 arranged on the tray pushing box body 22a detects the deceleration area, the control module is used to drive the tray pushing box 22 to decelerate. The setting position of the deceleration area should match the distance that the tray pushing box 22 moves and contacts with the battery pack. Specifically, the setting position of the deceleration area should be set as follows: when the tray pushing box 22 moves towards the battery pack located in the battery bracket, the tray pushing box 22 moves into the deceleration area first to decelerate the tray pushing box 22 after the second detection member 244 sends a signal, and then generates an attaching signal and an initial contact signal by the displacement of the first connection member 232 and the second connection member 233, so that the tray pushing box 22 stops moving.

As shown in Fig. 13 and Fig. 14, the first detection member 243 used to form the reset area is a reset detection member 243b, which is installed between the two ends of the moving direction of the tray pushing box 22 in the battery tray 803 and is set away from the battery carrier. Specifically, the reset detection member 243b is rectangular, and when the second detection member 244 arranged on the tray pushing box body 22a detects the reset area, the control module is used to drive the tray pushing box 22 to stop moving, so that the tray pushing box 22 can stop at a relatively accurate position during the reset process, so as to improve the repeatability and reliability of the battery swapping device.

As shown in Fig. 7, the first detection member 243 used to form the limit area is a limit detection member 243c, the number of the limit detection members 243c is two, which are respectively installed in the position between the two ends of the moving direction of the tray pushing box 22 in the battery tray 803, and are arranged on the outside of the battery tray 803 relative to the deceleration detection member 243a and the reset detection member 243b. The purpose of setting the limit area is to indicate the movement limit of the tray pushing box 22, therefore, the setting positions of the two limit detection members 243c are the areas that the tray pushing box 22 will not enter during normal movement, that is to say, when the second detection member 244 detects that the tray pushing box 22 enters the limit area, it indicates that there is a problem in the operation of the battery swapping device, and at this time, the tray pushing box 22 should stop moving. Preferably, the operation of the whole battery swapping device can also be stopped and an error alarm can be sent to enable the maintenance engineer to intervene and solve the problem.

In the embodiment, the second detection member 244 is four proximity sensors, which are respectively used to detect a deceleration detection member 243a, a reset detection member 243b and two limit detection members 243c, so that the second detection member 244 and the first detection member 243 are set in pairs one by one to avoid the reliability risk caused by the repeated use of the sensor, and the four proximity sensors are respectively set at the four corners of the tray pushing box body 22a, so as to correspond to the four first detection members 243 (respectively used to form a deceleration area, a reset area and two limit areas).

It should be specifically noted that, in the embodiment, when the second detection member 244 detects that the tray pushing box 22 is located in the preset area, it is not necessary to control the control module to change the movement state of the tray pushing box 22, but it should also be combined with the moving direction of the preset action generated by the tray pushing box 22 relative to the battery tray 803 to make a unified judgment.

For example, when the preset action generated by the tray pushing box 22 relative to the battery tray 803 is that the tray pushing box 22 extends relative to the battery tray 803, if the second detection member 244 detects that it is in the deceleration area, the tray pushing box 22 should be controlled to decelerate; when the second detection member 244 detects that it is in the reset area, it should not control the tray pushing box 22 to stop, because at this time, the tray pushing box 22 may just start from the reset area and start moving towards the direction of the deceleration area.

On the contrary, when the preset action generated by the tray pushing box 22 relative to the battery tray 803 is that the tray pushing box 22 retracts from the extended state, if the second detection member 244 detects that it is in the reset area, it should control the tray pushing box 22 to stop; when the second detection member 244 detects that it is located in the deceleration area, the tray pushing box 22 should not be controlled to decelerate, because at this time, the tray pushing box 22 may just start from the deceleration area and begin to move towards the direction of the reset area.

However, the priority of the signal that the second detection member 244 detects that the tray pushing box 22 is located in the limit area should be set to the highest, and when the second detection member 244 detects that the tray pushing box 22 is located in the limit area, the operation of the whole battery swapping device should be stopped immediately to avoid causing safety accidents.

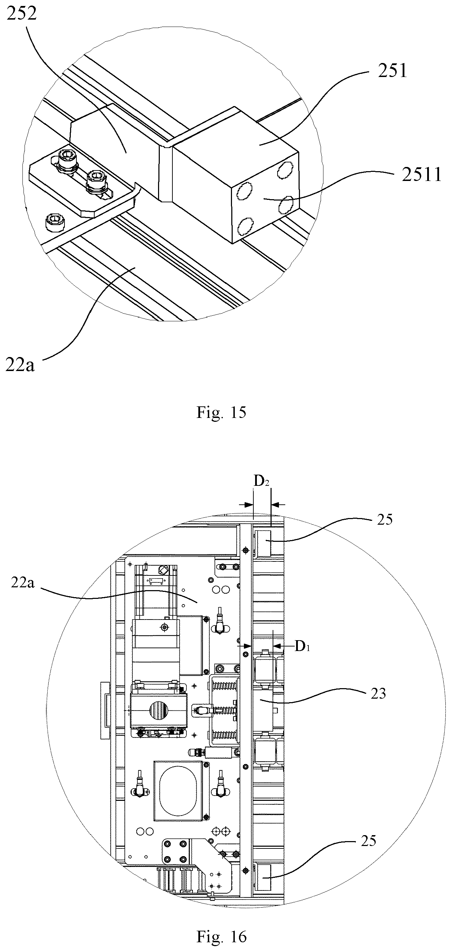

As shown in Fig. 7 and Fig. 15, the tray pushing box 22 in the embodiment further includes two balance parts 25, two sides of the connection part 23 along the transverse direction (that is, the X direction in Fig. 7) of the tray pushing box body 22a are respectively provided with one balance part 25, and the balance part 25 is used to balance the movement state of the battery pack in the process of pushing or pulling the battery pack, so that the battery pack can be supported by the balance part 25 to maintain a relatively accurate mobile posture under the push of the adsorption device 231 on the tray pushing box 22. Wherein, two balance parts 25 are respectively arranged at equidistant positions on both sides of the connection part 23, so that the deviation correction angles of the balance part 25 to both ends of the battery pack 100 are the same, and the battery pack can be corrected in time no matter which direction the battery pack 100 deviates towards.

Wherein, the so-called mobile posture of the battery pack refers to the position posture of the battery pack when it moves between the battery tray 803 and the battery bracket, that is, the tilt situation of the battery pack when it moves between the battery tray 803 and the battery battery bracket (see Fig. 9, at this time, the position posture of the battery pack 100 is good), and then the mobile posture of the battery pack is poor, the battery pack is easy to interfere with the side guide wheel 4 of the battery tray 803 or the side guide wheel of the battery bracket, resulting in the battery pack being stuck on the battery tray 803 or the battery bracket.

Both sides of the connection part 23 are respectively provided with one balance part 25, which can balance the movement state of the battery pack 100 during the movement of the battery pack 100 driven by the tray pushing box 22, so that the battery pack 100 can be adjusted by the balance part 25 no matter which side the battery pack deviates towards, to prevent the collision between the battery pack 100 and the battery tray 803 or battery bracket due to the deviation, reduce the wear of the battery pack 100, battery tray 803 and battery bracket, and increase the reliability and safety of the battery swapping process.

In the embodiment, the connection part 23 is arranged at a middle position of the tray pushing box body 22a along the X direction, and two balance parts 25 are respectively arranged at equidistant positions on both sides of the connection part 23, so that two balance weights can support the battery pack relatively balanced.

Specifically, the side of the connection part 23 towards the connection surface of the battery pack (that is, the adsorption surface 2311) is not on the same plane as the balance surface of the balance part 25 towards the battery pack. On this basis, as shown in Fig. 16, based on the moving direction of the tray pushing box body 22a to the battery bracket (that is, the Y direction), the connection part 23 protrudes from the tray pushing box body 22a by a first width D1, the balance part 25 protrudes from the tray pushing box body 22a by a second width D2, and the first width D1 is greater than or equal to the second width D2. That is, the balance surface is more far away from the battery pack than the adsorption surface 2311, and the connection part 23 protrudes towards the side of the battery pack 100 relative to the balance part 25, so that when the tray pushing box 22 contacts with the battery pack with a comparatively normal mobile posture, the adsorption surface 2311 of the connection part 23 can contact with the battery pack first, and only when the position and posture of the battery pack 100 are poor (or misalignment occurs), the surface of the battery pack 100 may contact with the balance part 25, thus, the movement state of the battery pack 100 is adjusted to balance by the balance part 25.

In the embodiment, the balance part 25 comprises a push block 251, which is in a cube shape, and the rectangular surface towards the side of the battery pack is used to contact with the battery pack to correct the movement posture of the battery pack. The push block 251 is installed on the side of the tray pushing box body 22a towards the battery bracket by the switching structure 252, the push block 251 is used to contact with the battery pack, and by installing the push block 251 on the tray pushing box body 22a, the reaction force received by the balance part 25 supporting the battery pack can be directly applied on body of the tray pushing box 22. Preferably, the push block 251 is made of elastic polyurethane material to make the push block 251 elastic and supportive at the same time, wherein the purpose of the push block 251 being elastic is to make the push block 251 able to alleviate certain distance deviation by its own compression when (the adsorption device 231 of) the connection part 23 is compressed, avoid that the battery pack cannot push the first connection member 232 and the second connection member 233 to compress due to the rigidity of the push block 251, so that the detection module can trigger the attaching signal and the initial contact signal.

Preferably, the centers of two balance parts 25 are not on the same straight line as the center of the connection part 23. In the embodiment, as shown in Fig. 16, the centers of the two balance parts 25 and the center of the connection part 23 are not on the same straight line L in the height direction (that is, the Z direction), that is, there is a deviation in the setting height between two balance parts 25 and the connection part 23. This structural setting can make the contact surface of the balance part 25 and the battery pack, and the contact surface of the connection part and the battery pack not in the same direction, so as to strengthen the stability of the connection of the battery pack and reduce the deviation generated during the battery pack movement process.

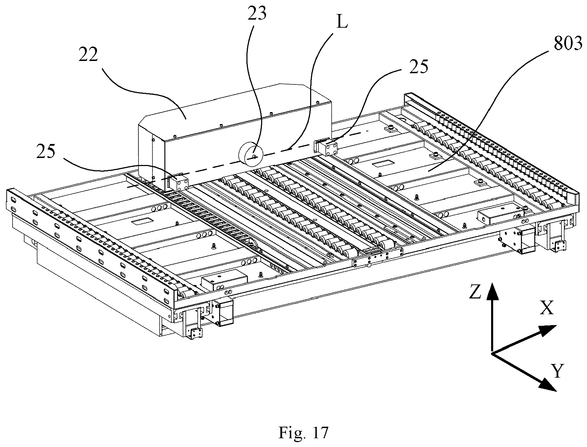

It should be specifically noted that the battery tray 803 and the tray pushing box 22 shown in the attached drawings of the embodiment are only used to illustrate the specific structure. In addition, as shown in Fig. 17, in order to facilitate the display of the internal structure of the tray pushing box 22, the outer cover of the tray pushing box 22 is hidden in other drawings except Fig. 17. Although the specific embodiments of the present invention are described above, it should be understood by those skilled in the art that this is only an example, and the scope of protection of the present invention is defined by the appended claims. Those skilled in the art can make various changes or modifications to these embodiments without departing from the principles and essence of the present invention, but these changes and modifications fall into the scope of protection of the present invention.

## Claims

1. A tray pushing box, which is arranged on a battery tray of a battery swapping device, and is used for pushing or pulling a battery pack between the battery tray and a battery compartment or a battery bracket in an electric vehicle, which is **characterized in that** the tray pushing box comprises:
a tray pushing box body, which can move on the battery tray;
a detection module, which is used for detecting a contact state between the tray pushing box body and the battery pack;
a control module, which is electrically connected to the detection module, the control module being used for controlling a movement state of the tray pushing box body, and the control module controlling the tray pushing box body to implement a corresponding movement state when the detection module detects that the contact between the tray pushing box body and the battery pack is completed.

2. The tray pushing box as claimed in claim 1, wherein the tray pushing box further comprises a connection part, which is arranged on the tray pushing box body, and the connection part is used to connect with the battery pack when the tray pushing box body contacts with the battery pack.

3. The tray pushing box as claimed in claim 2, wherein the connection part is arranged on the side of the tray pushing box body towards the battery bracket.

4. The tray pushing box as claimed in claim 3, wherein the connection part is movable relative to the tray pushing box body, and the detection module detects a contact state between the connection part and the battery pack by detecting a movement state of the connection part.

5. The tray pushing box as claimed in claim 3, wherein the connection part comprises a detection rod, the detection module comprises a proximity sensor, and the proximity sensor is used to detect the movement state of the detection rod; and/or
a surface where the connection part is attached to the battery pack is a connection surface, and the detection rod protrudes a preset length towards the direction of the battery pack compared with the connection surface.

6. The tray pushing box as claimed in claim 2, wherein the connection part comprises a first connection member and a second connection member, the detection module comprises a first detection module and a second detection module, the first detection module is used to detect a first contact state between the first connection member and the battery pack, and the second detection module is used to detect a second contact state between the second connection member and the battery pack.

7. The tray pushing box as claimed in claim 6, wherein the first connection member can be displaced relative to the tray pushing box body, and the first detection module is used to detect a displacement state of the first connection member.

8. The tray pushing box as claimed in claim 7, wherein the connection part further comprises a movable part, the first connection member is connected to the tray pushing box body by the movable part, the movable part is compressible along the moving direction of the tray pushing box body, the first detection module is arranged on the compression path of the movable part, and the first detection module is used to detect the position of the first connection member to judge whether it is in the first contact state.

9. The tray pushing box as claimed in claim 7, wherein the second connection member is arranged on the first connection member along the direction of the tray pushing box body towards the battery bracket, and can be displaced relative to the first connection member, and the second detection module is used to detect a displacement state of the second connection member; and/or
the second connection member can be movably arranged on the first connection member, the second detection module is arranged on the active path of the second connection member, and the second detection module is used to detect the position of the second connection member to judge whether it is in the second contact state.

10. The tray pushing box as claimed in claim 8, wherein the movable part comprises:
a sliding structure, the first connection member is positioned on the tray pushing box body by the sliding structure, and realizes sliding of the first connection member along the moving direction of the tray pushing box body;
an elastic structure, which drives the first connection member to return to its initial position when the elastic structure exerts a force on the first connection member to make the first connection member is not in contact with the battery pack;
the first detection module is arranged on the sliding path of the sliding structure and is used to detect whether the first connection member is compressed to a preset position;
preferably, the sliding structure comprises a support rod, one end of the support rod is connected to the tray pushing box body, and the first connection member is sleeved on the support rod and can slide on the support rod;
the elastic structure comprises an elastic element, the elastic element is sleeved on the support rod, one end of the elastic element is against the tray pushing box body, and the other end of the elastic element is against the first connection member.

11. The tray pushing box as claimed in claim 6, wherein the first connection member further comprises an adsorption device, and the second connection member is arranged on an adsorption surface of the adsorption device.

12. The tray pushing box as claimed in claim 3, wherein the tray pushing box comprises:
a driving part, which is connected with the tray pushing box body, and the driving part is used to drive the tray pushing box body to move;
at least two balance parts, two sides of the connection part along the transverse direction of the tray pushing box body are respectively provided with at least one balance part, and the balance part is used to balance the movement state of the battery pack in the process of pushing or pulling the battery pack.

13. The tray pushing box as claimed in claim 12, wherein the centers of the at least two balance parts are not on the same straight line as the center of the connection part; and/or
the connection part is arranged at a middle position in the transverse direction of the tray pushing box body, and the two balance parts are respectively arranged at equidistant positions on both sides of the connection part.

14. The tray pushing box as claimed in claim 12, wherein a connection surface of the connection part towards the battery pack is not on the same plane as a balance surface of the balance part towards the battery pack.

15. The tray pushing box as claimed in claim 14, wherein based on the moving direction of the tray pushing box body to the battery bracket, the connection part protrudes from the tray pushing box body by a first width, the balance part protrudes from the tray pushing box body by a second width, and the first width is greater than or equal to the second width.

16. The tray pushing box as claimed in claim 15, wherein the balance part comprises a push block, which is arranged on the side of the tray pushing box body towards the battery bracket, and the push block is used to contact with the battery pack.

17. The tray pushing box as claimed in claim 16, wherein the connection part is movable relative to the tray pushing box body;
preferably, the push block is an elastic member;
preferably, the material of the push block is polyurethane.

18. The tray pushing box as claimed in any one of claims 12-17, wherein the connection part is an adsorption device.

19. A battery pack locking judgment method, which is **characterized in that** the battery pack locking judgment method is implemented based on the above tray pushing box as claimed in claim 3, the connection part comprises an adsorption device, the battery pack locking judgment method is used to judge whether the battery pack is locked on the battery bracket, and the battery pack locking judgment method comprises the following steps:
step S 1. controlling the adsorption force of the tray pushing box on the battery pack to reach a preset value;
step S2. controlling the tray pushing box to return a preset distance to judge the locking state of the battery pack.

20. The battery pack locking judgment method as claimed in claim 19, wherein the connection part further comprises a detection rod, the detection module comprises a proximity sensor, the detection rod is movable relative to the tray pushing box body and used to contact with the battery pack, and the proximity sensor is used to detect the movement state of the detection rod;
in the step S2, judging whether the battery pack is locked on the battery bracket by detecting whether the proximity sensor detects the movement state of the detection rod;
when the proximity sensor detects the movement state of the detection rod, it is judged that the battery pack is locked successfully; when the proximity sensor does not detect the movement state of the detection rod, it is judged that the battery pack fails to be locked.

21. The battery pack locking judgment method as claimed in claim 20, wherein in the step S2, the preset distance that the tray pushing box returns is greater than or equal to the moving stroke of the detection rod relative to the tray pushing box body.

22. The battery pack locking judgment method as claimed in claim 19, wherein in the step S2, when the result of judging the locking state of the battery pack is that the battery pack is locked successfully, the following step is further comprised: controlling the tray pushing box to return; and/or
after controlling the tray pushing box to return, the following step is further comprised: controlling a double extension mechanism of the battery swapping device to return.

23. The battery pack locking judgment method as claimed in claim 19, wherein in the step S2, when the result of judging the locking state of the battery pack is that the battery pack fails to be locked, locking the battery pack on the battery bracket again, and performing the step S1 and the step S2.

24. A battery swapping device, which is **characterized in that** the battery swapping device comprises a tray pushing box as claimed in any one of claims 1-18.

25. The battery swapping device as claimed in claim 24, wherein the battery swapping device is used to transfer a battery pack between the battery compartment and the electric vehicle, and the battery swapping device comprises:
a battery tray, the tray pushing box is movably connected to the battery tray, to push or pull the battery pack between the battery tray and the battery bracket;
a control module, which is used for controlling a movement state of the tray pushing box;
a detection module, which is used to detect whether the tray pushing box is located in a preset area of the battery tray, and the detection module is electrically connected to the control module;
when the detection module detects that the tray pushing box is located in the preset area, the control module controls the tray pushing box to change the movement state.

26. The battery swapping device as claimed in claim 25, wherein the preset area comprises at least one of the following:
the preset area comprises a deceleration area, when the detection module detects that the tray pushing box is located in the deceleration area, the control module controls the tray pushing box to decelerate;
the preset area comprises a reset area; when the detection module detects that the tray pushing box is located in the reset area, the control module controls the tray pushing box to stop;
the preset area comprises a limit area; when the detection module detects that the tray pushing box is located in the limit area, the control module controls the tray pushing box to stop.

27. The battery swapping device as claimed in claim 26, wherein the detection module comprises a pair of a first detection member and a second detection member that cooperates with each other, the first detection member is arranged on the battery tray, and the second detection member is arranged on the tray pushing box.

28. The battery swapping device as claimed in claim 27, wherein
the first detection member comprises a deceleration detection member, the deceleration detection member is an induction block or an induction belt, the deceleration detection member is installed on the battery tray and is set towards the tray pushing box, and forms the deceleration area; and/or
the deceleration detection member is installed at the end of the battery tray close to the battery bracket and extends along the moving direction of the tray pushing box.

29. The battery swapping device as claimed in claim 27, wherein the first detection member comprises a limit position detection member, which is installed at the two ends of the moving direction of the tray pushing box in the battery tray, and forms the limit area; and/or
the first detection member comprises a reset detection member, which is installed between the two ends of the moving direction of the tray pushing box in the battery tray.

30. The battery swapping device as claimed in any one of claims 27-29, wherein the second detection member is a proximity sensor, the second detection member is installed in a position corresponding to the first detection member in the tray pushing box, the second detection member is electrically connected to the control module, and is used to detect whether the tray pushing box is located in the preset area.

31. A method for controlling the battery swapping device as claimed in any one of claims 25-30, which is **characterized in that** the method comprises the following steps:
controlling the movement generating a preset action of the tray pushing box relative to the battery tray;
the movement state of the tray pushing box is controlled according to the preset action and the position of the tray pushing box on the battery tray.

32. The method for controlling the battery swapping device as claimed in claim 31,
wherein
the preset action is that the tray pushing box extends relative to the battery tray, and when the tray pushing box is located in the deceleration area, the tray pushing box is controlled to decelerate; or
the preset action is that the tray pushing box retracts from the extended state, and when the tray pushing box is in the reset area, the tray pushing box is controlled to stop.

33. A battery pack connection control method for a battery swapping device, wherein the battery swapping device is used to transfer a battery pack between a battery compartment and an electric vehicle, the battery pack is locked on the battery compartment or a battery bracket in the electric vehicle, the battery swapping device comprises a battery tray and a tray pushing box, and the tray pushing box is used to push or pull the battery pack between the battery tray and the battery bracket, which is **characterized in that** the battery pack connection control method comprises the following steps:
controlling the tray pushing box to move towards the battery pack;
judging whether the contact between the tray pushing box and the battery pack is completed;
if so, controlling the tray pushing box to stop moving and to connect the battery pack.

34. The battery pack connection control method for battery swapping device as claimed in claim 33, wherein the step of judging whether the contact between the tray pushing box and the battery pack is completed comprises:
detecting a first contact state between the tray pushing box and the battery pack to obtain a corresponding first contact signal;
detecting a second contact state between the tray pushing box and the battery pack to obtain a corresponding second contact signal;
when the first contact signal and the second contact signal are obtained, it is judged that the contact between the tray pushing box and the battery pack is completed.
